(19) Europäisches Patentamt
European Patent Office
Office européen des brevets

(11) **EP 2 101 390 A2**

(12) **EUROPEAN PATENT APPLICATION**

(43) Date of publication:
**16.09.2009 Bulletin 2009/38**

(51) Int Cl.:
***H02J 7/00*** *(2006.01)*

(21) Application number: **09460011.1**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.03.2008 PL 38470408**

(71) Applicant: **Chargee Sp. z o.o.**
**03-134 Warszawa (PL)**

(72) Inventors:
• **Giza, Leszek**
**03-141 Warszawa (PL)**
• **Padzinski, Andrzej**
**03-134 Warszawa (PL)**

(74) Representative: **Twardowska, Aleksandra**
**Jan Wierzchon & Partners**
**Patent and Trademark Attorneys**
**Ul. Zurawia 47/49**
**00-680 Warszawa (PL)**

(54) **Method and device for the self service charging of batteries and portable electronic devices**

(57)     The subjects of the invention are self-service device for charging batteries and operating electronic devices and a method of a self-service device functioning for charging and operating of electronic device. More precisely, the solution concerns a device which uses network chargers recommended for particular models of electronic devices, thus ensuring the safety of the charging process.

Fig.1

## Description

The subjects of the invention are self-service device for charging batteries and operating electronic devices and a method of a self-service device functioning for charging and operating of electronic device. More precisely, the solution concerns a device which uses network chargers recommended for particular models of electronic devices, thus ensuring the safety of the charging process.

Within the last few years the number of mobile phones and portable electronic devices used has risen notably. In an effort to meet the demands of the market, manufacturers develop devices that integrate more and more functions in one casing - phone, e-mail client, minicomputer, camera, digital camera, music player, movie player, GPS receiver. These features require bigger and bigger hardware resources and power supply, which causes significantly quicker discharging of the batteries in such devices. A parallel trend is the miniaturization of devices which makes it impossible to equip them with batteries or accumulators of greater capacity. The effect is that their operational time decreases, unless they are recharged. As a consequence, the users of such devices find it hard to function in the public space without frequent recharging of the batteries. The lack of ability to charge portable electronic appliances in public places means that many active people, who tend to be increasingly pressed for time, are experiencing a huge discomfort and restriction of personal and professional activity.

Charging devices available on the market are developed individually, while the number and types of cables implemented in them, which enable charging of specific type of batteries, is limited in view of the growing number of manufacturers and models of devices with different types of charging plugs. Therefore the installed devices are very quickly "removed form the market".

The patent description EP0773519 (published on 13 November 1996) describes a vending machine for charging of a secondary battery of a mobile phone, provided with a plurality of charging blocks each conforming to a specific type of mobile phone and the mobile phone secondary battery, used for charging many kinds of secondary batteries depending on the type of the mobile phone. This device comprises charging time selection buttons for setting the charging time corresponding to each of the many charging blocks, lock/unlock mechanism for locking/unlocking a key on the door provided in each of the charging blocks, a stocker for receiving at least one coin and/or at least one banknote, a calculator for calculating the amount of money of said coin and/or bill which have been received in the stocker, and a charging control circuit for controlling each of the many charging blocks to charge a secondary battery of a mobile phone attached in one of the many charging blocks, in accordance with the amount of money calculated by the calculator and the charging time set by the selection buttons.

The patent description GB2433355 (published on 20 June 2007) describes a charge station with multiple electrical sockets. The electrical sockets are mounted on the outside of the station. The charge station has a cover fastened on hinges and small notches. All sockets are connected to the main cable. The station may be mounted on a wall by means of openings in the side surface. It may be produced of metal or plastic and be equipped with RDC system. The charge station is a base for connection of low voltage discharging systems for such devices, as mobile phones, camcoder batteries, music players, torches, electronic games - every type of device that can be safely charged in one place.

The patent application KR20030042401 (published on 28 May 2003) describes an appliance for automatic and manual charging of electronic device batteries for improving application of battery charging by means of a method of measurement and control of the charging process with the use of an engine, a sensor and a microprocessor. The appliance charges different types of electronic devices, e.g. mobile phones, PDAs, portable electronic games, notebooks, digital cameras and camcoders. The first level is started the moment the battery is placed in the charging device in a horizontal or vertical position, which makes the terminal move up and down pressing the battery. At that time the second level is started and as a result of this activity the terminal is linked with the battery.

The patent application KR1020060017846 (published on 28 August 2007) contains a description of a docking station which offers the possibility of charging batteries and of a way of controlling the charging process of replacement notebook batteries, which may be used for charging multiple batteries at the same time.

Despite the charging solutions for electronic appliances available on the market, which are nothing but lending of chargers in public places for free or against payment or devices enabling charging of mobile phone batteries in a way that does not guarantee safety of devices placed inside them, there is a constant need to develop a solution which would eliminate the abovementioned fears and ensure safety of devices without the use of power cables of unknown origin or even simply mounted electrodes. An additional problem is the guarantee of an easy replacement of available chargers as the market trends and terminal location determinants change, as well as securing the operation of the device in spite of power supply failure. It is equally important to ensure maintenance of the manufacturer's guarantee on an electronic device in case of its paid charging in terminals having its own power cables or charging electrodes.

The purpose of this invention is provision of means that could be used in order to create a solution that would allow to save time allotted to recharging batteries parallel to securing the deposited device even after completion of the charging process. In greater detail, the purpose of this solution was to construct a self-service device - a vending machine - used to charge electronic device batteries ranging beyond the scope of mobile phone batteries, with an additional capacity of data transmission from deposited electronic devices, parallel to ensuring maximum security of access to the devices locked in the terminal.

This invention is an accomplishment of this purpose and a solution of problems described in the state of technology, concerning developing a mechanism that is simple in use and resistant to any errors and changes in the workflow and at the same time protecting the user against the loss of paid money and deposited device. What is more, by employment of network chargers available on the market and recommended for particular models of electronic devices, the solution comprises a device that guarantees safety of the charging process (without damage to the deposited devices) and calms user's anxiety with regard to power cables used in existing devices.

The subject of the invention is a self-service device for battery charging containing many charging compartments adjusted to portable electronic devices, comprising charging compartments, a mechanism for locking/unlocking of the compartments, charger plugs in the compartments, a coin slot with a validator, a charging control system used for monitoring each of the many battery charging compartments, selection buttons, an LCD display, characterised in that a self-service device has at least 3 compartments with lockable doors, where each of the compartments is equipped with at least 1 transmission cable plug-in jack, preferably 1 to 10 different transmission cable plug-in jacks, and chargers for electronic devices to which a discharged device is connected, a compartment door closing mechanism (servomechanism), compartment lighting, signal diodes, each device being equipped with a user identity control module interface located on the external casing, preferably fingerprint scanner.

Preferably, the user identification module is a biometric reader (a fingerprint reader, a palm vein pattern reader, a wrist vein pattern reader, a retina pattern reader) or a credit card reader.

Preferably, a device is at the same time intended for operation of electronic devices, preferably for making back-up copies of data contained in the charged device and for installing and updating its software.

Preferably, a device is intended for delivery of advertisements sent via WiFi or Bluetooth communication module.

Preferably, the electronically controlled compartment door closing mechanism is an electromagnet or a key lock.

Preferably, the electronically controlled compartment door closing mechanism allows the bolting of the compartment door and/or the key to be turned and removed from the lock only when the following happens simultaneously: an electronic device is connected to an appropriate plug in the compartment, the service is paid for and the compartment door closed which is confirmed by the closed door sensor.

Preferably, the device is equipped with a closed door sensor, preferably by means of a reed relay.

Preferably, the signal diodes inform about operational mode of the compartment.

Preferably, for interaction with the user the device is equipped with an LCD display informing about subsequent steps of service completion and operation mode.

Preferably, a device supports portable electronic devices, advantageously mobile phones, cameras, digital cameras, Mp3 players, PDAs, palmtops, portable electronic games and game consoles, notebooks, iPods, BlackBerry devices, GPS receivers, Bluetooth sets.

Preferably, the communication module is a GSM/EDGE/UMCS, and/or WiMax, and/or WiFi, and/or LAN module network adapter, and/or Ultra-Wideband module, and/or Bluetooth module.

Preferably, the payment module is a cash validator, banknote validator, and/or a payment card validator, and/or a credit card validator, and/or NFC payment module, and/or SMS Premium payment module, and/or micropayment module and that the payment is possible in at least one currency, preferably two currencies.

Preferably, in the case of power supply failure the accumulator maintains the device in operational mode allowing reclaiming of deposited devices and informs about emergency mode.

The next subject of this invention is a method of a self-service device functioning for charging and operating of electronic devices, characterized in that the user identity control module - a biometric reader, and/or a payment card reader, and/or a credit card reader, preferably a fingerprint reader, saves the user's identity key comprising at least 1 fingerprint, preferably 2 fingerprints, and stores it in the memory until repeat verification, a message confirming successful scanning and creation of a personal access key or a repeat scanning message is displayed, after the user pays the fee the discharged device is connected in one of the compartments and afterwards the door is closed and a repeat user identification is made in order to confirm the correctness of the procedure, next the information on the set charging time is sent to the compartment and the door is locked, after the prepaid charging time has elapsed the central system control module communicates with the compartment controller and orders disconnecting the charger from the telephone, thus completing the charging service, after which the terminal starts calculating a programmed free deposit time and after it has elapsed - payable deposit time - for the device left in the compartment, wherein the compartment door is opened after subsequent user identification performed through the identification module based on a comparison with one of the fingerprints saved during creation of the user identity key. Preferably, if a TAMPER input protects the device against unauthorized access, and in addition in the case of incorrect verification of the service person's fingerprint saved in the database of the identification module or the lack of such identification, prior to opening of the back service door the device saves this fact in the event history and immediately informs the service centre; additionally all functions accessible from the inside of the terminal are blocked, advantageously opening of compartments and editing fingerprints of the service personnel.

For better understanding of the invention, the solution and way of operating is presented with reference to figures.

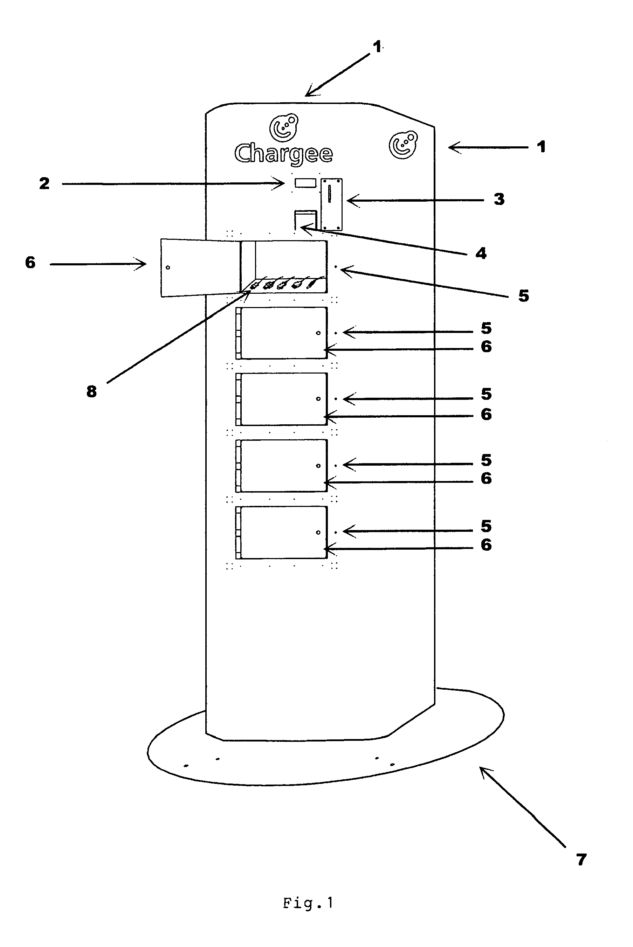

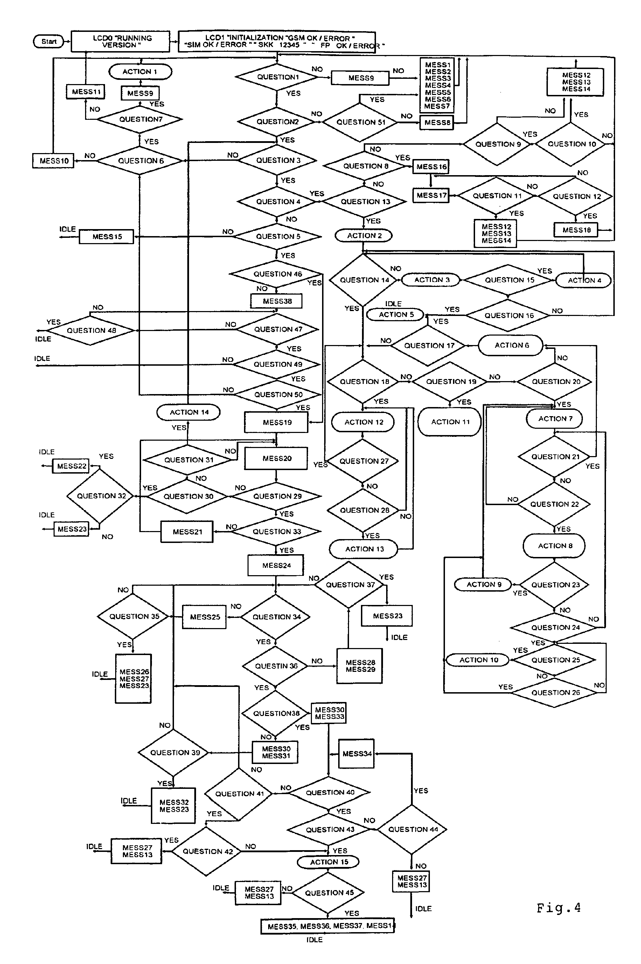

**Figure 1** represents devices for charging batteries of electronic devices, where: 1 - neon
2 - LCD display
3 - coin slot
4 - fingerprint scanner
5 - signal diode
6 - compartment with doors
7 - base
8 - plugs
**Figure 2** represents the perspective of the device.
**Figure 3** represents the design of the device structure, where:
9 - LCD panel
10 - communication module
11- payment module
12 - key, fingerprint scanner
13 - central system control module
14 - power supply bus
15 - compartment set
16 - pins
17 - communication and control bus
18 - compartment control system
19 - door closing mechanism
20 - closed door sensor
21 - status indicator
22 - 230 V power supply
23 - emergency power supply
24 - lock
**Figure 4** represents the mechanism of functioning of the device for charging electronic device batteries.

An example solution based on the invention is presented below.

**Example**

Like every vending machine selling products/providing services of low value, the device has in the basic version a coin slot, which may be replaced with a banknote reader, a credit card or chip card reader on the markets where low value banknotes are used or in case of provisioning of services with higher value. It may also be supported by micropayment interface. The device-terminal with a generic service of charging batteries/accumulators of electronic devices with the ability to implement a simultaneous data transmission via the DATA cable in accordance with an SMS order during the charging process.

Versatility of devices supported by the terminal has been achieved by employment of network chargers produced and launched along with marketing of new electronic device models. These chargers have been incorporated into mechanisms and software for managing detection of connected devices and activation of power supply on a given plug of the network charger. Thus the very process of battery charging is controlled by factory-made devices (network chargers), what guarantees correctness of the charging process itself, positive user experience and maintenance of manufacturer's guarantee on the device. The application of chargers - ready market products - allows quick and flexible customization of the chargers available in the device in accordance with usage statistics and local determinants.

The terminal has lockable compartments 6 in which user devices are locked during the charging process, what enables their owners to move away while their device battery is being charged.

Compartments 6 have electronically controlled servomechanism (alternatively electromagnet, key) which controls the terminal software.

The safety of the lock and of the access to compartments 6 is achieved by (aside from the metal sheeting of the terminal) explicit and unique identification keys that are not used by other users, created by a fingerprint scanner 4 and comprising at least one fingerprint, preferably two fingerprints, (alternatively a retina scanner) or other identification solutions - proximity cards, code cards.

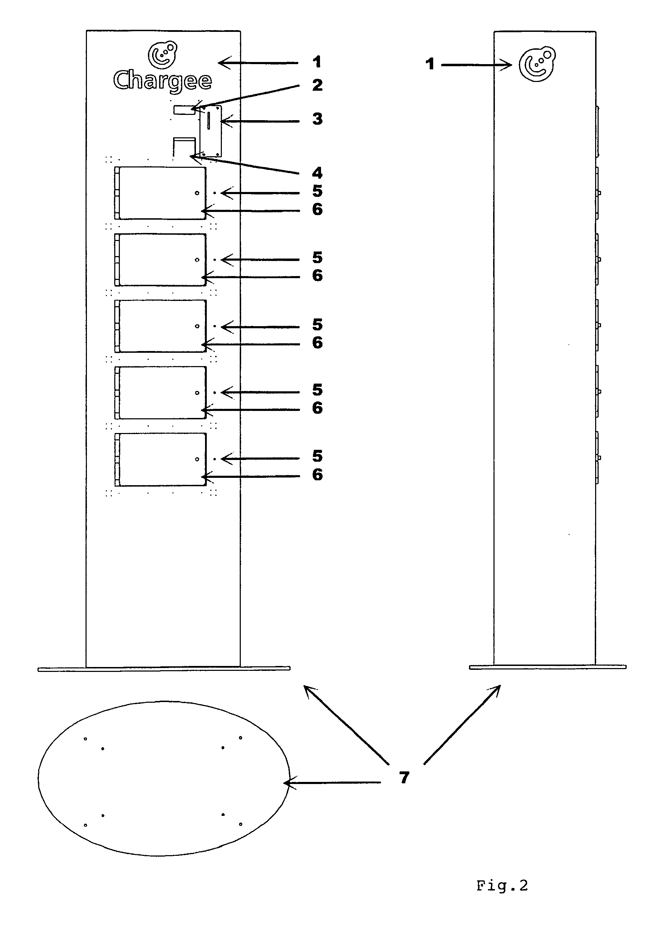

The design of the device structure has been presented in Fig. 2. It comprises communication buses 17, 14, modular outputs enabling extension and replacement of different types of identification, payment and communication solutions, depending on immediate needs.

The terminal has been equipped with an accumulator sustaining the operation of electronics and enabling keeping the compartments locked, user identification, release of devices deposited in the terminal and emergency/service communication.

The terminals are equipped with an LCD display 2 presenting user manuals, displaying commands and confirmations for the user in at least one language, preferably two languages. Due to the ability to complete the charging service despite display failure/unavailability, the procedure and instructions, along with the rules, are presented in a text/graphic format on the casing of the device.

The correctness of user operations and additional interaction of the device is indicated by tricolour diodes 5 signalling the state of each of the compartments 6: "closed compartment taken service completed", "closed compartment taken service in progress", "open compartment with detected connected electronic device".

The terminal has sensors detecting device connections, compartment door opening, service door opening, sabotage attempts and communication between individual subassemblies remaining in interaction with the notification system informing the service centre of events in the device.

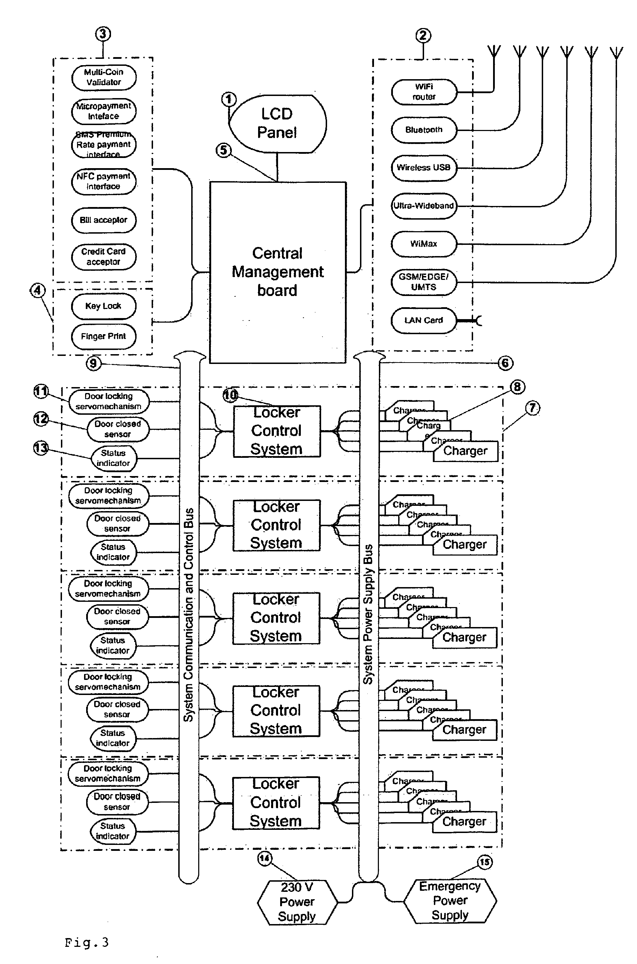

Efficient functioning of the terminal is ensured by the device operation system depicted in Fig. 3. It takes into consideration all predictable actions, user behaviour during service provisioning, faults and obstacles that users may encounter, and shortens the whole procedure to four simple steps: fingerprint scanning, payment - coin insertion, connecting the device to the charger plug and closing compartment door. Simplifying the operation procedure of such a complex device to four simple steps is the result of solutions applied in this invention. The whole work of the device is controlled by developed terminal software with configurable operation parameters.

**Detailed example of terminal realization**

*Requirements regarding the Terminal:*

- ability to provide battery charging services for electronic devices;
- the device comprises a casing with compartments - compartments 6 for different types of devices;
- access to the compartments - compartments 6 is secured by way of a fingerprint scanner 4;
- electronic charging control system, compartment - compartment 6 access control system and notifications via GSM/EDGE/UMTS network 10 system;
- the casing is intended for indoor assembly on a pedestal or directly to the floor;
- every compartment 6 can have only one attached device at a time;
- the terminal allows the use of all compartments at the same time.

*Terminal main elements and components*

Lockable compartments 6 - each terminal has 5 lockable compartments for depositing and attaching of electronic devices. The compartments are equipped with sensors detecting the position of the door - reed relay, as well as a closing mechanism fitted with servomechanism (other variants of compartment door bolting: electromagnet, patent lock). The compartments have lighting activated when the compartment door opens.

*Charger plugs*

Each terminal compartment is equipped with five different charger jacks/plugs 8 of chargers supporting makes of electronic devices most frequently used on the given market, e.g.: Apple, Acer, Asus, HP, Palm, Qtek, Mitac, Nokia, Sony Ericsson, LG, Sagem, Sharp, SPV, HTC, Motorola, Samsung, Siemens. The device contains chargers supporting both dedicated device makes and universal plugs for devices by many manufacturers, e.g. mini USB, USB. The number, layout and type of chargers in the compartments is modifiable and linked to the frequency of occurrence on the market of the given device make and model supported by the charger placed in the compartment. The number and type of chargers available in the terminal depends on the local market and may be adjusted.

*Signal diodes*

Tricolour signal diodes 5 placed next to each compartment inform the user whether main actions during the use of the device have been performed correctly (compartment free and ready to render the service, device properly attached in the compartment, compartment occupied with charging process completed) with respect to given compartment.

*LCD display*

The terminal is equipped with an LCD 2 display which facilitates its operation. The display shows instructions in at least one language, preferably two languages, and guides the user through the whole process of battery charging service for electronic devices. Besides, the display communicates irregularities in the operation of the device by the user or irregularities in the functioning of the device itself.

*Coin slot*

The device accepts payments for provisioned services by means of an installed payment interface - a coin slot 3 (banknote reader, payment card reader, microchip card reader, SMS reception module, prepaid micropayment confirmations module) accepting coins in at least one currency system, preferably two currency systems, programmed via the motherboard of the device.

*Fingerprint scanner*

A module controlling user identification 4 in the terminals which are equipped with electronically controlled compartment bolting (e.g. servomechanism, electromagnet).

*Compartment control system*

A module controlling given compartment 6: detection of closing/opening of the door, device attachment detection, charging time adjustment, controlling of compartment bolting mechanism, activating and deactivating of power supply in individual charger plugs depending on the prepaid charging time.

This module cooperates with the device motherboard and the terminal control software.

*Motherboard*

Central unit of the device 13 equipped with GSM/EDGE/UMTS communication module 10 (WIFI, Bluetooth, wireless, Wimax, LAN) connected with compartment control systems 18, power source and other components of the device responsible for payment verification, user identification, LCD display, external communication and terminal compartments control by means of a communication bus 17 and a supply bus 14. The unit has terminal control and configuration software installed. Central unit has service configuration connectors. It may also be controlled and configured via GSM/EDGE/UMTS communication module or other, depending in the model of the terminal.

**Casing**

Metal casing has the following dimensions:

Width: 40 - 55 cm
Height: 170 - 210 cm
Depth: 30 - 45 cm
Number of compartments - 5
Compartment dimensions:

Width: 20-35 cm
Height: 10 - 25 cm
Depth: 15 - 25 cm

Compartments - the compartments 6 are separated from one another with a distance of 1 - 3 cm.
Each compartment - compartment 6 can be independently disassembled for replacement without disturbing other compartments.
At the front the casing has doors for each of the compartments 6, allowing access to their content. At the back there is a service door allowing access to the terminal subassemblies. Each door is equipped with a blockade controlled electronically form the level of compartment control system. The side of the casing has assembly holes for informational leaflet dispensers.
The base 7 is formed by a pedestal/stabilizer (15 - 35 kg in weight) in the shape of an ellipsis or a cut ellipsis allowing placing the terminals directly by the wall and alternative assembly to the floor with screws.

*Functional requirements regarding terminal models with fingerprint scanners and coin slots:*

The state of the door prior to paying for the service may be "open" or "closed", whereas after closing them properly they are bolted and blocked.
Opening of the door after charging may occur only in the situation permitted by the CCS system (compartment control system - 18).
The front part of the compartment 6 has a "flange" at the bottom which protects its contents from slipping out of the locker after opening of the door.
On the front side of the casing there is a user operation field with: a coin slot 3, LCD display 2, fingerprint scanner 4 and a place to put user manual and price list. The coin chamber is accessible through the door in the back of the casing.
The back door is equipped with a lock protecting the contents of the locker against unauthorized access and a sensor connected to Central Management Module 13.
The structure of the back door allows replacement of the compartments 6, replacement of electronics, replacement of the door closing mechanism 19 as well as order subassemblies. The board with the compartment control system (CCS) (18) is mounted on the back wall of each compartment. Central system management module 13 with a GSM/EDGE/UMTS communication module 10 is mounted on the top part below the neon 1.
Each compartment is equipped with a closed compartment door sensor 20 allowing to determine the door position (open or closed).
For interaction with the user the unit is equipped with an LCD display informing about subsequent steps of service completion, and each of the compartments 6 has a tricolour signal diode (LED) 5 indicating its operational state.
The terminal has an accumulator 23 sustaining the power supply of compartment door closing mechanisms and device electronics.

*Payment module - coins validator*

Payment module - coins validator - the type of coins used may be programmed:

*User identification module* - fingerprint scanner FP 12

*Motherboard with GSM/EDGE/UMTS communication module* 10

The motherboard with communication module 10 ensures the transfer of information concerning the terminal's work and its software via SMS/packet data transmission, controls the compartments and communicates with CCS module and FP module. It is mounted on the front inner side of the locker wall.
It is possible to programme the device settings via configuration SMS, RS port.
Besides, the device is equipped with a BUZZER for sound signalling of events in the system, while the GSM signal level is indicated by the 4 LED diodes.
The board 13 contains 5 SWITCHES used to open individual compartments in the service mode and to program FINGERPRINT patterns of the service personnel, an LCD display 2 for interaction with the user and a RESET button which programmatically resets the GSM system and initializes the IDLE state of the CSS modules;

the device stores system event information.

*Compartment control system*

The compartment door closing mechanism 19 is controlled through checking of the charging process in individual channels for the given compartment, communication with the communication module and the motherboard of the compartment control system mounted on the back wall of the compartment; closed compartment door sensor 20 - reed relay monitors if the compartment door has been closed, while the tricolour LED diode signals the compartment state. Individual chargers placed in the compartment, as well as transmission cables, are controlled through the compartment control system. Individual compartment control systems 18 are connected to one another and to the Central system management module by means of a communication bus 17 and a power supply bus 14. *Motherboard with GSM/EDGE/UMTS communication module 10*

Central device in the system that controls all other cooperating electronic devices.

**Functioning of the device**

The controller works in accordance with the following scheme:

Idle state - the device is idle and waiting for the charging service to be paid for.

Fingerprint scanning detected-we are checking if it is possible to add a user, who is then saved until repeat verification. A message is shown that confirms successful scanning and creation of a personal access key or a message encouraging the user to repeat scanning in case of undecipherable reading of the scanned finger.

The controller checks if coins have been inserted into the validator (minimal value programmed in the validator = 0,1 PLN). The messages on the display update the amount inserted in the coin slot 3 and corresponding charging time that has been paid for in accordance with current price list of the device.

Insertion of a coin starts countdown of Tload* time during which the discharged device should be connected. Each insertion of a coin reactivates the countdown and updates the displayed message about prepaid charging time.

The monitoring of the discharged device connection process begins. If the discharged device is not attached during the Tload time - a respective message is displayed and the user looses prepaid credit.

The system checks if only one device has been connected to the charger. In the case of attaching more devices, a respective message requests the user to leave only one connected device in the given compartment.

After the device has been attached correctly, the terminal starts countdown of the time during which the door should be closed - a message is displayed informing user that additional coins may be inserted in order to prolong the covered charging time or requesting closing of the door. Exceeding of the Tclose time causes the loss of prepaid credit. After the device is disconnected but before the door is closed the user may insert additional coins and increase the credit. Insertion of a coin reactivates the Tclose time.

Once the door is closed, the fingerprint is scanned for the second time in order to verify the correctness of performed activities and, if it matches the pattern saved at the beginning of the procedure, the information on prepaid charging time is sent to the given compartment and the door is locked. Any irregularities in the selection of the compartment will cause the loss of prepaid credit, opening of the door, thus the end of the service.

Once the door is closed, there is no possibility to make any changes in the compartment and its opening means resignation form the service that has been paid for.

The door is opened after fingerprint scanning subsequent to that made by the closing of the door. If the scanning occurs before the prepaid charging time has elapsed, the service is considered completed and the compartment vacated.

The condition of the fingerprint scanner is being checked by the system at all times. It undertakes any measures necessary to maintain the scanning function.

All actions to be performed by the user are preceded by messages informing him/her about subsequent steps in the operation of the terminal. After their completion a respective LCD display message confirms correctness of the procedure.

After the prepaid charging time has elapsed (unless the device has been collected earlier) the GSM controller communicates with the compartment controller and orders disconnecting the phone from the charger, thus ending the charging service. The terminal starts calculating a programmed free deposit time and after it has elapsed - payable deposit time - for the device left in the compartment. When collecting the device during payable deposit time, the user is required to pay for the deposit time, in accordance with respective messages shown on the display.

In the case that the user does not collect the deposited device and exceeds permitted deposit time (BUSY_TIME), the system should communicate his fact to the service centre via SMS. At the same time, if the user collects the phone after permitted deposit time has elapsed, the system should send an SMS message informing the service centre about this fact in order to call the service person off.

If the phone is lying in the compartment longer than permitted time (Tdep) allows, on attempting to collect it the user should pay a fine proportional to exceeded compartment occupation time.

Amount of fine = Fine rate[PLN/min.]*[min]

where:

$$T = Tx - Tdep$$

Tx - time since the end of charging until now

Tdep - permitted phone deposit time (for Tdep = 0 the fine option is disabled)

Fine rate and Tdep are programmable through an PC application.

Only after the payment is done will the bolt lock be released, enabling deposited device to be collected.

The controller saves information and may communicate via SMS the prepaid credit amount, type of charger chosen, hour, exceeded permitted locker occupation time after the end of charging, etc.

The GSM communication controller has programmable parameter, such as: service centre number, number of person responsible for service, PIN, etc. Configuration of these parameters is made by means of special software. The parameters may be entered only during device restarting and the communication of GSM module with the software may not last longer than 1 minute. After this time the GSM module enters normal operation mode.

GSM communication module controller monitors also power supply voltage and after its failure or recovery (Tac time elapsed since the failure/recovery) sends a message about this event to the RAP and SERV numbers. Since the supply voltage failure till its recovery the operation of the device is blocked; it does not accept coins or provide any services.

The terminal enters a mode enabling retrieving of deposited devices.

GSM communication module 10 communicates with CCS 18 and, in the case of ten subsequent failures in communication with any of the modules, stops provisioning of services (but completes current ones) and notifies about it the service person or service centre.

LED diodes (*these are other diodes*) - GSM communication module has four LED diodes used for indicating the GSM signal level. Additionally in the service mode they signal currently performed tasks/requests.

BUZZER - used for sound signalling and confirming performed tasks. The device generates a short sound signal in case of an order carried out correctly and a long sound signal for an error during its completion. A sound signal confirms also button operations.

TAMPER input - protects the device against unauthorised access. If disturbance of the TAMPER input is not preceded by a correct scanning of a service person fingerprint saved by the identification module, the device stores this fact in the memory and immediately informs the service centre.

Additionally, all functions accessible from the inside of the terminal are blocked (opening compartments and editing service personnel fingerprints, etc.).

In the case of authorised access the device realizes all available service functions.

In the case of service works the device shows a relevant message on the LCD display 2, informing the user of the situation. At that time phones cannot be deposited or collected.

The TAMPER input will not be monitored if the system did not register any service person (factory device - not programmed).

RESET button - programmatically RESETS the GSM programme and also the CCS 18 systems. The use of this button involves losing all information about provisioned charging services, while the compartments - compartments 6 move into IDLE state and are considered vacated.

The MENU buttons have two functions:

- opening of compartments,

- fingerprint patterns editing mode.

In the compartment opening mode the buttons have the functions labelled 1 - 5. This mode is entered after the 4/ADD button has been pressed for 3 sec.

This is signalled by the lighting of LED diodes (5) (lowest GSM signal level diode flashes). Once the mode is activated, pressing the button 1 - 5 opens the relevant compartment.

In the pattern edition mode the buttons activate the functions labelled 1,2,3, ADD, ERASE. This mode is entered after the 4/add button has been pressed for 3 sec. This is signalled by the lighting of LED diodes (all GSM signal level diodes flash). Once this mode is activated, pressing the button 1,2, or 3 and then ADD or ERASE will switch to an add/erase fingerprint pattern mode. The number of chosen position should be displayed by flashing of the GSM signal level diodes (flashing diode 1 - position 1; 1 and 2 - position 2; 1,2 and 3 - position 3).

*Pattern adding*

Once the position number is chosen and ADD button pressed, the LCD display (2) should show the information about user added mode and a usual procedure should be performed.

*Pattern erasing*

Once the position number is chosen and ERASE button pressed, the pattern is erased.

Exit from the service mode should follow automatically after 5 minutes of idleness or after closing of the door (TAMPER) and after repeat scanning of the fingerprint of the service person who activated the mode (reverse procedure).

Each time a button is pressed in the service mode a sound signal is heard (BUZZER).

    *) Tload - 1-240 sec.

    **)Tclose - 1-240 sec.

    ***) Tac - 1-1440 min.

**Claims**

1. A self-service device for battery charging containing many charging compartments adjusted to portable electronic devices, comprising charging compartments, a mechanism for locking/unlocking of the compartments, charger plugs in the compartments, a coin slot with a validator, a charging control system used for monitoring each of the many battery charging compartments, selection buttons, an LCD display, **characterised in that** a self-service device has at least 3 compartments with lockable doors (6), where each of the compartments (6) is equipped with at least 1 transmission cable plug-in jack (8), preferably 1 to 10 different transmission cable plug-in jacks, and chargers for electronic devices to which a discharged device is connected, a compartment door closing mechanism (19) (servomechanism), compartment lighting, signal diodes (5), each device being equipped with a user identity control module interface (4) located on the external casing, preferably fingerprint scanner.

2. A device according to claim 1, **characterized in that** the user identification module is a biometric reader (a fingerprint reader, a palm vein pattern reader, a wrist vein pattern reader, a retina pattern reader) or a credit card reader.

3. A device according to claim 1, **characterised in that** it is at the same time intended for operation of electronic devices, preferably for making back-up copies of data contained in the charged device and for installing and updating its software.

4. A device according to claim 1 or 2, **characterised in that** it is intended for delivery of advertisements sent via WiFi or Bluetooth communication module.

5. A device according to claim 1 or 2, **characterised in that** the electronically controlled compartment (6) door closing mechanism (19) is an electromagnet or a key lock.

6. A device according to claim 4, **characterised in that** the electronically controlled compartment door closing mechanism (19) allows the bolting of the compartment door and/or the key to be turned and removed from the lock only when the following happens simultaneously: an electronic device is connected to an appropriate plug (8) in the compartment (6), the service is paid for and the compartment door closed which is confirmed by the closed door sensor (20).

7. A device according to claim 1 or 2, **characterised in that** the device is equipped with a closed door sensor (20), preferably by means of a reed relay.

8. A device according to claim 1 or 2, **characterised in that** the signal diodes (5) inform about operational mode of the compartment (6).

9. A device according to claim 1 or 2 or 7, **characterised in that** for interaction with the user the device is equipped with an LCD (2) display informing about subsequent steps of service completion and operation mode.

10. A device according to claim 1 or 2, **characterised in that** it supports portable electronic devices, advantageously mobile phones, cameras, digital cameras, Mp3 players, PDAs, palmtops, portable electronic games and game consoles, notebooks, iPods, BlackBerry devices, GPS receivers, Bluetooth sets.

11. A device according to claim 1 or 1, **characterised in that** the communication module is a GSM/EDGE/ UMCS, and/or WiMax, and/or WiFi, and/or LAN module network adapter, and/or Ultra-Wideband module, and/or Bluetooth module.

12. A device according to claim 1 or 2, **characterised in that** the payment module (3) is a cash validator, banknote validator, and/or a payment card validator, and/or a credit card validator, and/or NFC payment module, and/or SMS Premium payment module, and/or micropayment module and that the payment is possible in at least one currency, preferably two currencies.

13. A device according to claim 1 or 2, **characterised in that** in the case of power supply failure the accumulator maintains the device in operational mode allowing reclaiming of deposited devices and informs about emergency mode.

14. A method of a self-service device functioning for charging and operating of electronic devices, **characterized in that** the user identity control module (4) - a biometric reader, and/or a payment card reader, and/or a credit card reader, preferably a fingerprint reader, saves the user's identity key comprising at least 1 fingerprint, preferably 2 fingerprints, and stores it in the memory until repeat verification, a message confirming successful scanning and creation of a personal access key or a repeat scanning message is displayed, after the user pays the fee the discharged device is connected in one of the compartments (6) and afterwards the door is closed and a repeat user identification is made in order to confirm the correctness of the procedure, next the information on the set charging time is sent to the compartment and the door is locked, after the prepaid charging time has elapsed the central system control module (13) communicates with the compartment controller (18) and orders disconnecting the charger from the telephone, thus completing the charging service, after which the terminal starts calculating a programmed free deposit time and after it has elapsed - payable deposit time - for the device left in the compartment (6), wherein the compartment door is opened after subsequent user identification performed through the identification module (4) based on a comparison with one of the fingerprints saved during creation of the user identity key.

15. A method according to claim 13, **characterised in that** if a TAMPER input protects the device against unauthorized access, and in addition in the case of incorrect verification of the service person's fingerprint saved in the database of the identification module (12) or the lack of such identification, prior to opening of the back service door the device saves this fact in the event history and immediately informs the service centre; additionally all functions accessible from the inside of the terminal are blocked, advantageously opening of compartments and editing fingerprints of the service personnel.

Fig.1

Fig.2

Fig.3

Start

LCD0 "RUNNING VERSION "

LCD1 "INITIALIZATION "GSM OK / ERROR " "SIM OK / ERROR " " SKK  12345 " " FP  OK / ERROR "

ACTION 1

MESS11   MESS9

QUESTION7

QUESTION1   NO   NO   MESS9

MESS1
MESS2
MESS3
MESS4
MESS5
MESS6
MESS7

MESS12
MESS13
MESS14

YES

QUESTION2   NO   YES   QUESTION 51   MESS8

YES

MESS10   NO   QUESTION 6

QUESTION 9   YES   QUESTION 10   NO

QUESTION 3   NO   QUESTION 8   YES   MESS16

MESS17   QUESTION 11   NO   QUESTION 12

QUESTION 4   QUESTION 13   NO

MESS12
MESS13
MESS14   MESS18

IDLE   MESS15   NO   QUESTION 5   ACTION 2

YES

QUESTION 46   YES

QUESTION 14   ACTION 3   QUESTION 15   YES   ACTION 4

NO   MESS38

IDLE   ACTION 5   YES   QUESTION 16   NO

YES

NO   QUESTION 48   NO   QUESTION 47   NO   QUESTION 17   ACTION 6

IDLE

NO   QUESTION 49   QUESTION 18   NO   QUESTION 19   NO   QUESTION 20   NO

NO   QUESTION 50   YES

ACTION 14   MESS19   ACTION 12   ACTION 11   ACTION 7

YES

IDLE   MESS22   YES   QUESTION 31   NO   MESS20   QUESTION 27   QUESTION 21   YES

QUESTION 32   YES   QUESTION 30   NO   QUESTION 29   NO   QUESTION 28   NO   QUESTION 22   NO

IDLE   MESS23   NO   MESS21   NO   QUESTION 33   ACTION 13   ACTION 8

YES   MESS24

ACTION 9   QUESTION 23

NO   QUESTION 37   YES

QUESTION 35   MESS25   QUESTION 34   MESS23   QUESTION 24   NO

YES   IDLE   YES

MESS26
MESS27
MESS23   IDLE   QUESTIN 36   NO   MESS28   MESS29   ACTION 10   QUESTION 25

YES   NO   QUESTION 26   NO

QUESTION38   MESS30   MESS33   YES   MESS34

NO

QUESTION 39   MESS30   MESS31   YES

YES

IDLE   MESS32   MESS23   QUESTION 41   NO   QUESTION 40   YES

YES   QUESTION 43   NO   QUESTION 44   YES

IDLE   MESS27   MESS13   YES   QUESTION 42   NO   YES   ACTION 15   NO   MESS27   MESS13

IDLE   MESS27   MESS13   NO   QUESTION 45   IDLE

YES

MESS35, MESS36, MESS37. MESS1

IDLE

Fig.4

**REFERENCES CITED IN THE DESCRIPTION**

**Patent documents cited in the description**

- EP 0773519 A
- GB 2433355 A
- KR 20030042401
- KR 1020060017846